# EUROPEAN PATENT SPECIFICATION

(11) **EP 4 037 462 B1**
(45) Date of publication and mention of the grant of the patent: **11.06.2025**
(21) Application number: 20776059.6
(22) Date of filing: 02.10.2020
(51) Int. Cl.: A01C 23/04

(54) **DEVICE FOR PREPARING A FERTILIZER SOLUTION FOR USE WITH A FERTIGATION SYSTEM**
VORRICHTUNG ZUR HERSTELLUNG EINER DÜNGEMITTELLÖSUNG ZUR VERWENDUNG MIT EINEM FERTIGATIONSSYSTEM
DISPOSITIF DE PRÉPARATION D'UNE SOLUTION D'ENGRAIS DESTINÉE À ÊTRE UTILISÉE AVEC UN SYSTÈME DE FERTIGATION

(30) Priority: 02.10.2019 EP 19200985
(43) Date of publication of application: 10.08.2022
(73) Proprietor: Yara International ASA, 0277 Oslo (NO)
(72) Inventor: VAN SANTEN, Wouter, 4484 TD Kortgene (NL); BROSS, Remco, 2662 BB Bergschenhoek (NL)
(74) Representative: De Clercq & Partners
(86) International application number: PCT/EP2020/077618
(87) International publication number: WO 2021/064156

(56) References cited:
- DE-C- 237 688
- GB-A- 237 089
- US-A- 2 626 482
- US-A- 2 757 047
- US-A- 3 260 464
- US-A- 5 829 873

## Description

### Field of the Invention

This invention relates to an ambulatory device for preparing a fertilizer solution for use with a fertigation system, in particular for removing insoluble solid matter from an essentially water-soluble substance after dissolution, in particular an essentially water-soluble fertilizer with a low amount of insoluble matter, before the essentially water-soluble substance is dissolved into water and provided to a fertigation system.

### Background

Fertigation is a technique where well-defined amounts of nutrients are dissolved in water from the irrigation system and fed to the irrigated plants. Greenhouses, such as the ones using hydroponics, or substrate-based culture, are generally provided with such systems to supply one or more liquid fertilizers to the crops, grown in said greenhouse. These systems can be relatively simple but may also be part of a more complex fertigation system, including one or more sensors which measure the total water and/or nutrient consumption by the crop, the temperature in the greenhouse, and various other parameters. Simple systems start with the addition of one or more essentially water-soluble fertilizers to water, mixing the essentially water-soluble fertilizer until it is dissolved and feeding the resulting solution to a fertigation system. A very common problem is that the essentially water-soluble fertilizer may contain a (low) amount of insoluble matter, also called fines, which does not dissolve easily. These fines should not enter the hydroponic fertigation system as they could clog the sprinklers, drippers, etc., and hence, such essentially water-soluble fertilizers are not suitable for use in hydroponic systems. This issue also prevents the widespread use of essentially water-soluble fertilizers in hydroponic systems. Therefore, there is a need for a simple system, that preferably operates in the field, preferably without the need for an electricity network, for dissolving in water an essentially water-soluble substance comprising insoluble solid matter, for filtering the aqueous solution of the water-soluble substance to remove the insoluble solid matter, and for dosing the filtered aqueous solution of the water-soluble substance to an external water line.

### Background prior art

Utility model CN 208406339 U (Yunnan Runjie Agricultural Science and Technology Co., January 22, 2019) discloses a rectangular box for the dissolution of potassium sulphite, comprising a motor resting on top of the box and driving a shaft with a stirring vane, which shaft rests on a filter assembly mounted horizontally slanted in the box. The resulting filtered solution is drained at the bottom.

US2757047A (Friedmann, 1956) discloses a device for dissolving liquid manure in water, comprising a container divided into two compartments separated by a filter, a manual mixing means, an injector and a pump.

US5829873A (Woodrow, 1998) discloses a device for mixing granular fertilizer or lawn treatment liquid in water, comprising a container containing two compartments separated by a funnel-shape copper screen, a mixing means and a valve for removing the liquid from the container.

US2626482A (Munday, 1953) discloses an apparatus for dissolving a fertilizer product in irrigation water, comprising a perforated basket.

The inventors have now found a solution to the above-mentioned problem.

It is therefore an object of the present invention to provide an ambulatory device for dissolving in water an essentially water-soluble substance comprising insoluble solid matter, for filtering the aqueous solution of the essentially water-soluble substance to remove the insoluble solid matter, and for dosing the filtered aqueous solution of the essentially water-soluble substance to an external water line.

### Summary of the Invention

According to one aspect, the invention relates to an ambulatory device and method for dissolving in water an essentially water-soluble substance comprising insoluble solid matter, for filtering the aqueous solution of the essentially water-soluble substance to remove the insoluble solid matter, and for dosing the filtered aqueous solution of the essentially water-soluble substance to an external water line as mentioned in the appended claims.

### Description of the drawings

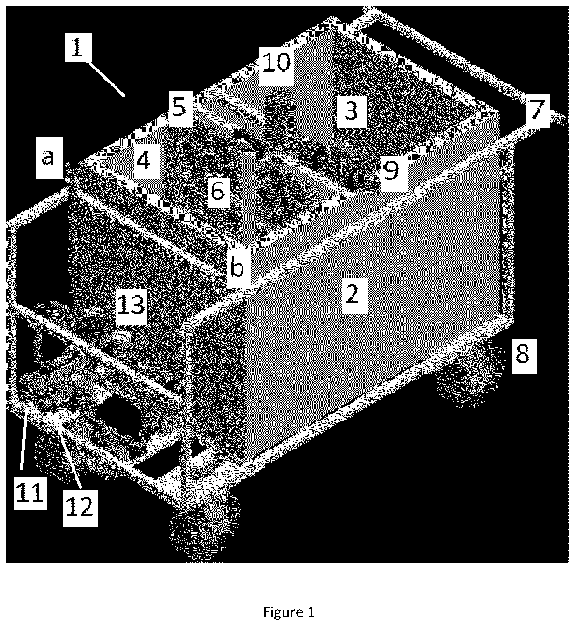

Figure 1 shows a 3D-drawing of an embodiment of the ambulatory device according to the invention.

### Detailed Description of the invention

Throughout the description and claims of this specification, the words "comprise" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the disclosure are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this specification (including any accompanying claims, abstract and drawings), or to any novel one, or any novel combination, of the steps of any method or process so disclosed.

The enumeration of numeric values by means of ranges of figures comprises all values and fractions in these ranges, as well as the cited end points. The term "ranges from ... to " as used when referring to a range for a measurable value, such as a parameter, an amount, a time period, and the like, is intended to include the limits associated to the range that is disclosed.

The term "approximately" and "about" as used when referring to a measurable value, such as a parameter, an amount, a time period, and the like, is intended to represent the measurement error associated with the technique to measure such parameter, amount, time period, and the like, and is considered to be 5% or less, depending on the measurement technique used. It should be understood that the value to which the term "approximately "and "about" refers per se has also been disclosed.

The term "essentially" as used when referring to a water-soluble substance is to be interpreted as a water-soluble substance which is, by its very nature, water-soluble at standard conditions, e.g. at room temperature (20°C) and 1 atm. Such substances have a solubility (defined as the maximum amount of solute that can be dissolved in a solvent at equilibrium) of 50 g/100 ml or more. For instance, ammonium nitrate (solubility of 150 g/100 ml at 20 °C) and urea (solubility of 1079 g/L at 20 °C) are highly soluble substances. Another example of a commercial fertilizer is YaraRega^{©} (13-2-21), a water-soluble NPK compound fertilizer based on ammonium nitrate formulations and containing less than 1 % of insoluble solid matter. This product can be applied through sprinkler pivots, micro sprinklers and some drip systems, but is not suitable for hydroponic systems.

### Device

According to one aspect, the invention relates to an ambulatory device for dissolving in water an essentially water-soluble substance comprising insoluble solid matter, for filtering the aqueous solution of the essentially water-soluble substance to remove the insoluble solid matter, and for dosing the filtered aqueous solution of the essentially water-soluble substance to an external water line.

The ambulatory device according to the invention comprises a container for holding an aqueous liquid, wherein the interior of the container is divided into two separate adjacent compartments, respectively designated the mixing compartment and the filtering compartment, separated by a vertically positioned filter screen comprising a filter. The filter screen separates the two compartments such that an aqueous liquid in either one of the two compartments is only allowed to traverse from one compartment into the other through the filter. The device further comprises a mixing means positioned in the mixing compartment, an outlet in the lower half of one of the walls or in the base of the mixing compartment for removal of the insoluble solid matter, and a pumpless dosing system connected, at its input end, to an outlet in the lower half of the filtering compartment for removal of the filtered aqueous solution, and, at its output end, designed to be connected to an external water line. The device is characterized in that the mixing compartment comprises a grid comprising a plurality of perforations, located above the outlet in the lower half of one of the walls or in the base of the mixing compartment but below the mixing means and essentially overlaying the entire bottom of the mixing compartment, for capturing, isolating and removing the insoluble matter, wherein the perforations of the grid are greater than the mesh size of the filter.

Within the context of this application, an ambulatory device designates a device that may be easily and manually moved by its operator, in particular within a field or a farm. In one embodiment, the ambulatory device according to the present invention weighs less than 50 kg, in particular less than 40 kg, more in particular less than 30 kg, when the mixing container is empty. An ambulatory device allows the operator to apply the fertilizer solution in any location of the farm or field without the need for a complex irrigation system to be installed. The ambulatory device may also be used to supply different irrigation systems which do not have a common water source.

According to one embodiment, the container has a substantially rectangular shape, defined by four upright rectangular side walls and a rectangular bottom wall. This design allows an easy mounting on a metal frame.

The device comprises moving means, for example wheels or one or more continuous tracks, such that the frame, carrying the container, is movable by manually pushing the frame. In this way, the ambulatory device can be positioned in a hydroponic system by an operator close to the water means or water mains and removed again when the filtered aqueous solution has been dosed to the hydroponics system. Continuous tracks may be an advantage if the device has to be moved over rugged terrain, such as a growing field.

According to one embodiment, the volume ratio of the filtering compartment to the mixing compartment ranges from 1:1 to 1:5, preferable is 1:3. It was found practical to mix the aqueous solution in a compartment that is larger in volume than the filtering compartment.

According to one embodiment, the container is made of polyethylene, preferably a non-translucent polyethylene. Polyethylene is a cheap and inert material (for the aqueous solution) that can easily be welded or joined together and has a good mechanical strength to hold the aqueous composition inside and resist the shear forces during mixing. Preferably, it is non-translucent to prevent degradation of the aqueous solution under influence of sunlight when the ambulatory device is used to store such aqueous composition.

According to one embodiment, the mixing compartment is provided with a water inlet suitable to fill the mixing compartment with an amount of water. This can be a tube extending into the compartment though the top, or through one of the side walls, preferably in the top halve of it. The water inlet is designed to be connected to an external water line to provide the water to the mixing compartment. The water inlet may be equipped with a valve, preferably a manual valve, to dose the water to the mixing compartment. Alternatively, the mixing compartment has no water inlet, but is dosed with water through the open top with a hose connected to an external water line.

According to one embodiment, either one or both of the compartments is closed off by a lid, preferably by a removable lid. This prevents dust from entering the compartments. The lid may be completely removable, or it may be hinged to a side wall of the container.

According to one embodiment, the lid on the mixing compartment comprises an open grid, i.e. a pass-through grid that is open to the mixing compartment. In the extreme, the lid consists of the grid. Preferably, the dimensions of the grid are such that they match the dimensions of a bag of fertilizer, for example 50 x 50 cm. Preferably, the mesh size of the grid is such that it matches or exceeds the dimensions of fertilizer granules, for example 5 to 20 mm. The grid is designed such that it can support a bag of fertilizer, such as a 25 kg plastic bag of fertilizer. For example, the grid is made of metal, such as stainless steel. When the bag is cut open, its granularly content will easily fall into the mixing compartment. According to one embodiment, the grid may further comprise cutting means to cut through a bag of fertilizer, such as a knife, box cutter and the like. Alternatively, the mixing compartment comprises means for adding the essentially water-soluble substance into the mixing compartment, such as a hopper, transport belt and the like. Alternatively, the mixing compartment does not comprise such means; in that case, the operator will need to add the essentially water-soluble substance into the mixing compartment using external means, such as a shovel, a small container, or just manually add part of or all of the content of a bag of fertilizer into the mixing compartment.

According to one embodiment, the container may be closed by an air-tight lid, optionally in combination with the pass-through grid as described above. Once the essentially water-soluble substance has been added to the mixing container, it may be interesting to close the container in an air-tight manner. Doing so would allow to pressurize the container, e.g. with a manual pump, and facilitate the distribution of the aqueous solution to the external water line. This may be especially interesting where the pumpless dosing system is a Venturi-based system, since Venturi-based dosing systems may lead to a loss of pressure in the external water line where it delivers the aqueous solution. It may be easier to have an air-tight lid that can be mounted on top of the open grid that may be used to support a bag of fertilizer. If the air-tight lid can be mounted on top of the open grid, this would represent less operations for the user as he would not have to remove one lid to put the air-tight lid.

The filter screen, comprising a filter, divides the container into two compartments. According to one embodiment, the filter in the filter screen comprises more than about 50 %, preferably more than about 70 %, at most about 95 % of the filter screen surface. The filter can consist of a plurality of individual filter, or it can consist of one large filter. According to one embodiment, the filter comprises a plurality of circular filters, as shown in Figure 1. According to one embodiment, the filter occupies only the bottom half of the filter screen.

According to one embodiment, the filter has a mesh size (opening) ranging between 50 and 200 micrometres, meaning that it can capture and retain particles in the mixing compartment which are larger than 50 to 200 micrometres. The mesh size should be adequate to retain the particles present in the essentially water-soluble substance and prevent them from entering the filtering compartment.

In one embodiment, the filter is removeable. It may be required to change or clean the filter after some cycles of operations depending on the amount, size, and physical aspects of the water-insoluble matter comprised in the

The ambulatory device according to the invention further comprises a mixing means positioned in the mixing compartment. The mixing means are essential to mix the essentially water-soluble substance comprising insoluble solid matter and the water. According to one embodiment, the mixing means are selected from a manual mixer, a battery-operated 24 V-mixer, a combustion engine-operated mixer, and an electrical 220 V-mixer. When no electricity network is readily available, preferred mixing means are a manual mixer and a battery-operated 24 V-mixer. The mixing means can be fixed in the mixing compartment, or can be movably mounted in the mixing compartment, for example on an horizontal bar over the mixing compartment.

The ambulatory device according to the invention further comprises an outlet in the lower half of one of the walls or in the base of the mixing compartment for removal of the insoluble solid matter. Using this outlet, the insoluble solid matter can be removed from the mixing compartment by flushing and rinsing the mixing compartment with water. Preferably, such outlet is provided with a valve. Additionally, the filtering compartment comprises an outlet in the lower half of one of the walls or in the base of the filtering compartment for removal of insoluble solid matter. Using this outlet, the insoluble solid matter can be removed from the filtering compartment by flushing and rinsing the filtering compartment with water. Preferably, such outlet is provided with a valve.

The ambulatory device according to the invention further comprises a pumpless dosing system connected, at its input end, to an outlet in the lower half of the filtering compartment for removal of the filtered aqueous solution, and, at its output end, designed to be connected to an external water line. Such pumpless dosing system can be, for instance, be a Venturi-based system or a Dosatron^{©}. Dosatron chemical injectors are water-powered, non-electric chemical injectors to accurately inject chemicals into water lines. Dosatron injectors work using volumetric proportioning, ensuring that the chemical mixture remains the same regardless of variations in pressure and flow. A pumpless dosing system eliminates the need to provide a power source to the ambulatory system and ensure that the system may be used in locations where no power supplies is present.

The ambulatory device according to the invention offers a quick, crude, but surprisingly efficient device for dissolving in water an essentially water-soluble substance comprising insoluble solid matter, for filtering the aqueous solution of the water-soluble substance to remove the insoluble solid matter, and for dosing the filtered aqueous solution of the water-soluble substance to an external water line.

The ambulatory device according to the invention is also characterized in that the mixing container comprises a grid comprising a plurality of perforations, located above the outlet in the lower half of one of the walls or in the base of the mixing compartment but below the mixing means and essentially overlaying the entire bottom of the mixing container, for capturing, isolating and removing the insoluble matter, wherein the perforations of the grid are greater than the mesh size of the filter, in particular wherein the perforations of the grid are at least 1.0 cm wide. When the substance to dissolve in the mixing container comprises insoluble solid matter, this solid matter will accumulate in the mixing container. It may be possible to remove that insoluble solid matter after every operation, however this decreases the productivity of the operations. It was envisaged to place a grid comprising perforations in the mixing container above the outlet in the lower half of one of the walls or in the base of the mixing compartment but below the mixing means and essentially overlaying the entire bottom of the mixing container. The insoluble solid matter would settle through the plurality of perforations of the grid and be isolated from the part of the container that is being mixed by the mixing means. This grid would reduce the risk of clogging the filter as solid particles would be sequestered within the space defined by the bottom of the mixing container and the grid. The grid would allow to perform more cycles of operations before the operator has to remove the accumulated insoluble matter or before the filter has to be replaced or cleaned due to contamination.

The perforations of the grid may be of any shape, for example they may be circular, triangular, square, starred, or any non-regular polygonal shape. The perforations should be larger than the mesh size of the filter to allow the particles that are too big to cross the filter to settle at the bottom of the mixing container through the perforations. Insoluble solid matter in high-quality water-soluble substance, for example fertilizers, often have an average size below 1.0 cm. So the perforations may be at least or about 1.0 cm wide to ensure that a very large portion of the insoluble solid matter, for example about 90, 95 or 99% of the insoluble solid matter, settles through the perforations.

### Method

According to one aspect, the invention relates to a method for dissolving in water an essentially water-soluble substance comprising insoluble solid matter, for filtering the aqueous solution of the essentially water-soluble substance to remove the insoluble solid matter, and for dosing the filtered aqueous solution of the essentially water-soluble substance to an external water line.

The method comprises the step of providing an ambulatory device according to the invention. Said device has been designed to operate using the method according to the invention.

The next step is the step of providing an amount of water and essentially water-soluble substance comprising insoluble solid matter into the mixing compartment. According to one embodiment, the water is provided through a water inlet of the ambulatory device according to the invention, which inlet is suitable to dose the mixing compartment with an amount of water, as explained previously. Alternatively, the mixing compartment has no water inlet, but is dosed with water through the open top with a hose connected to an external water line, or with buckets, or in any way suitable. According to one embodiment, the essentially water-soluble substance is provided through the open top of the mixing compartment, for instance by cutting open a bag supported by the open grid of the ambulatory device according to the invention. Alternatively, the mixing compartment does not comprise means for adding the essentially water-soluble substance into the mixing compartment, and the essentially water-soluble substance is added using external means, such as a shovel, a small container, or just manually add part of or all of the content of a bag of fertilizer into the mixing compartment. Suitable dosing means can be used to determine the required dose, such as weighting means, volumetric means, or the like.

In one embodiment, the essentially water-soluble substance added to the mixing compartment comprises less than 5.0 weight%, in particular less than 3.0 weight%, more in particular less than 2.0 weight%, even more in particular less than 1.0 weight%, of water-insoluble matter.

In one embodiment, the essentially water-soluble substance does not comprise any gel or gel-like compounds. Gel or gel-like compounds may block the pores of the filter very quickly rendering the device inoperative. Gel compounds comprise hydrogel, organogels or xerogels. Gel-like compounds comprise colloid systems, for example colloid systems comprising humic acids.

The next step is the step of activating the mixing means until the essentially water-soluble substance comprising insoluble solid matter is dissolved. This can be through mixing using a mixer with a screw, an agitator or the like. The essentially water-soluble substance will dissolve into the aqueous solution which will be quickly divided over the two compartments through the filter, wherein the insoluble solid matter remains in the mixing compartment. The mixing step may take anything from 1 minute to 30 minutes. The operator can easily visually determine when the essentially water-soluble substance is completely dissolved.

The next step is activating the pumpless dosing system. In this way, the filtered aqueous solution of the essentially water-soluble substance is fed at a pre-set or adjustable rate to an external water line, preferably part of an hydroponic system. In this way, the filtered aqueous solution of the essentially water-soluble substance is merged with the water from the external water line and dosed to crops or plants that are fertilized through the hydroponic system. A pumpless dosing means may be activated according to the characteristics of this particular pumpless dosing means. For example, activating a dosing means may require opening a valve.

The entire method can be performed without the need for an electricity network.

The invention also relates to the use of the ambulatory device according to the invention for removing insoluble solid matter from an essentially soluble fertilizer by dissolution of the essentially soluble fertilizer in water and separation of the insoluble solid matter through filtration. The ambulatory device is a single unitary device uniting the functions of dissolution, filtration and dosing an aqueous solution of the essentially water-soluble substance, thereby removing insoluble solid matter from the aqueous solution of the essentially water-soluble substance. It is especially suitable for use with YaraRega^{©} (13-2-21), a water-soluble NPK compound fertilizer based on ammonium nitrate formulations and containing less than 1 % of water insoluble matter.

### Preferred embodiment of the ambulatory device

The device 1 is shown in its preferred embodiment in Figure 1. It comprises a substantially rectangular container 2, which is divided into a mixing compartment 3 and a filtering compartment 4 by a vertically positioned filter screen 5. The filter screen comprises a plurality of individual circular filters 6. The container 2 is mounted on a metal frame 7, provided with wheels 8, such that the frame, carrying the container, is movable by manually pushing the frame. In the embodiment shown, the volume ratio of the filtering compartment to the mixing compartment is about 1:2. The mixing compartment is provided with a water inlet 9 suitable to fill the mixing compartment with an amount of water and is equipped with a valve. The embodiment shown has no lid. Movable mixing means 10 are provided in the mixing compartment 3. An outlet in the base of the mixing compartment is provided for removal of the insoluble solid matter, connected to an outlet tube 11. An outlet in the base of the filtering compartment is provided for removal of the insoluble solid matter, connected to an outlet tube 12. A pumpless dosing system 13 is connected to the outlet tube 12 of the filtering compartment for removal of the filtered aqueous solution. In the embodiment shown, a Venturi-based system is shown, connected with two flexible tubes a and b to an external water line (not shown).

While aspects of the present invention have been particularly shown and described with reference to the embodiments above, it will be understood by those skilled in the art that various additional embodiments may be contemplated by the modification of the disclosed devices, methods and systems without departing from the scope of what is disclosed. Such embodiments should be understood to fall within the scope of the present invention as determined based upon the claims.

## Claims

1. An ambulatory device (1) for dissolving in water an essentially water-soluble substance comprising insoluble solid matter, for filtering the aqueous solution of the essentially water-soluble substance to remove the insoluble solid matter, and for dosing the filtered aqueous solution of the essentially water-soluble substance to an external water line, comprising :
(i) a container (2) for holding an aqueous liquid, wherein the interior of the container (2) is divided into two separate adjacent compartments, respectively a mixing compartment (3) and a filtering compartment (4), separated by a vertically positioned filter screen (5) comprising a filter (6),
(ii) a mixing means (10) positioned in the mixing compartment (3),
(iii) a pumpless dosing system (13) connected, at its input end, to an outlet in the lower half of the filtering compartment (4) for removal of the filtered aqueous solution, and, at its output end, designed to be connected to an external water line, **characterized in that** the ambulatory device comprises an outlet in the lower half of one of the walls or in the base of the mixing compartment (3) for removal of the insoluble solid matter, and the mixing compartment (3) comprises a grid comprising a plurality of perforations, located above the outlet in the lower half of one of the walls or in the base of the mixing compartment (3) but below the mixing means (10) and essentially overlaying the entire bottom of the mixing compartment (3), for capturing, isolating and removing the insoluble matter, wherein the perforations of the grid are greater than the mesh size of the filter.

2. Ambulatory device (1) according to claim 1, wherein the container (2) has a substantially rectangular shape, defined by four upright rectangular side walls and a rectangular bottom wall.

3. Ambulatory device (1) according to any one of claims 1 to 2, wherein the container (2) is positioned on a movable metal frame (7).

4. Ambulatory device (1) according to any one of claims 1 to 3, wherein the volume ratio of the filtering compartment (4) to the mixing compartment (3) ranges from 1:1 to 1:5, preferable is 1:3.

5. Ambulatory device (1) according to any one of claims 1 to 4, wherein the container (2) is made of polyethylene, preferably non-translucent polyethylene.

6. Ambulatory device (1) according to anyone of claims 1 to 5, wherein the mixing compartment (3) is provided with a water inlet (9).

7. Ambulatory device (1) according to any one of claims 1 to 6, wherein either one or both of the compartments is closed off by a lid, preferably wherein the lid is removable.

8. Ambulatory device (1) according to claim 7, wherein the lid on the mixing compartment (3) comprises an open grid.

9. Ambulatory device (1) according to anyone of claims 1 to 8, wherein the filter (6) in the filter screen (5) comprises more than 50 %, preferably more than 70 %, at most 95 % of the filter screen surface.

10. Ambulatory device (1) according to anyone of claims 1 to 9, wherein the filter (6) has a mesh size ranging between 50 and 200 micrometres.

11. Ambulatory device (1) according to anyone of claims 1 to 10, wherein the mixing means (10) are selected from a manual mixer, a battery-operated 24 V-mixer, a combustion engine-operated mixer, and an electrical 220 V-mixer.

12. Ambulatory device (1) according to anyone of claims 1 to 11, wherein the pumpless dosing system (13) is a Venturi-based system or a water-powered, non-electric chemical injector.

13. Ambulatory device according to any one of claims 1 to 12, wherein the perforations of the grid are at least 1.0 cm wide.

14. Method for dissolving in water a water-soluble substance comprising insoluble solid matter, for filtering the aqueous solution of the essentially water-soluble substance to remove the insoluble solid matter, and for dosing the filtered aqueous solution of the essentially water-soluble substance to an external water line, comprising :
(i) providing an ambulatory device (1) as claimed in any one of claims 1 to 13;
(ii) providing an amount of water and water-soluble substance comprising insoluble solid matter into the mixing compartment (3);
(iii) activating the mixing means (10) until the essentially water-soluble substance comprising insoluble solid matter is dissolved; and
(iv) activating the pumpless dosing system (13).

15. Use of the ambulatory device according to any one of claims 1 to 13 for removing insoluble solid matter from an essentially soluble fertilizer by dissolution of the essentially soluble fertilizer in water and separation of the insoluble solid matter through filtration.

## Patentansprüche

1. Ambulante Vorrichtung (1) zum Auflösen einer im Wesentlichen wasserlöslichen Substanz, die unlösliche Feststoffe umfasst, in Wasser, zum Filtern der wässrigen Lösung der im Wesentlichen wasserlöslichen Substanz, um die unlöslichen Feststoffe zu entfernen, und zum Dosieren der filtrierten wässrigen Lösung der im Wesentlichen wasserlöslichen Substanz zu einer externen Wasserleitung, umfassend:
(i) einen Behälter (2) zum Aufnehmen einer wässrigen Flüssigkeit, wobei das Innere des Behälters (2) in zwei getrennte benachbarte Kammern unterteilt ist, nämlich eine Mischkammer (3) und eine Filterkammer (4), die durch ein vertikal angeordnetes Filtersieb (5) mit einem Filter (6) getrennt sind,
(ii) eine Mischeinrichtung (10), die in der Mischkammer (3) angeordnet ist,
(iii) ein pumpenloses Dosiersystem (13), das eingangsseitig mit einen Auslass in der unteren Hälfte der Filterkammer (4) zum Entfernen der gefilterten wässrigen Lösung verbunden ist und ausgangsseitig dazu ausgelegt ist, mit einer externen Wasserleitung verbunden zu werden, **dadurch gekennzeichnet, dass** die ambulante Vorrichtung einen Auslass in der unteren Hälfte einer der Wände oder im Boden der Mischkammer (3) zum Entfernen der unlöslichen Feststoffe aufweist und die Mischkammer (3) ein Gitter mit einer Vielzahl von Perforationen umfasst, das oberhalb des Auslasses in der unteren Hälfte einer der Wände oder im Boden der Mischkammer (3), jedoch unterhalb der Mischeinrichtung (10) angeordnet ist und im Wesentlichen den gesamten Boden der Mischkammer (3) überdeckt, zum Auffangen, Isolieren und Entfernen der unlöslichen Feststoffe, wobei die Perforationen des Gitters größer als die Maschenweite des Filters ist.

2. Ambulante Vorrichtung (1) nach Anspruch 1, wobei der Behälter (2) eine im Wesentlichen rechteckige Form aufweist, die durch vier aufrechte rechteckige Seitenwände und eine rechteckige Bodenwand definiert ist.

3. Ambulante Vorrichtung (1) nach einem der Ansprüche 1 bis 2, wobei der Behälter (2) auf einem beweglichen Metallrahmen (7) angeordnet ist.

4. Ambulante Vorrichtung (1) nach einem der Ansprüche 1 bis 3, wobei das Volumenverhältnis der Filterkammer (4) zur Mischkammer (3) von 1:1 bis 1:5 reicht, vorzugsweise 1:3 beträgt.

5. Ambulante Vorrichtung (1) nach einem der Ansprüche 1 bis 4, wobei der Behälter (2) aus Polyethylen, vorzugsweise nicht-transluzentem Polyethylen, hergestellt ist.

6. Ambulante Vorrichtung (1) nach einem der Ansprüche 1 bis 5, wobei die Mischkammer (3) mit einem Wassereinlass (9) versehen ist.

7. Ambulante Vorrichtung (1) nach einem der Ansprüche 1 bis 6, wobei entweder eines oder beide der Kammern durch einen Deckel verschlossen sind, wobei der Deckel vorzugsweise entfernbar ist.

8. Ambulante Vorrichtung (1) nach Anspruch 7, wobei der Deckel auf der Mischkammer (3) ein offenes Gitter umfasst.

9. Ambulante Vorrichtung (1) nach einem der Ansprüche 1 bis 8, wobei der Filter (6) in dem Filtersieb (5) mehr als 50 %, vorzugsweise mehr als 70 %, höchstens 95 % der Filtersiebfläche umfasst.

10. Ambulante Vorrichtung (1) nach einem der Ansprüche 1 bis 9, wobei der Filter (6) eine Maschenweite im Bereich zwischen 50 und 200 Mikrometern aufweist.

11. Ambulante Vorrichtung (1) nach einem der Ansprüche 1 bis 10, wobei die Mischeinrichtung (10) aus einem Handmischer, einem batteriebetriebenen 24-V-Mischer, einem Verbrennungsmotor-betriebenen Mischer und einem elektrischen 220-V-Mischer ausgewählt ist.

12. Ambulante Vorrichtung (1) nach einem der Ansprüche 1 bis 11, wobei das pumpenlose Dosiersystem (13) ein Venturi-basiertes System oder ein wasserbetriebener, nicht-elektrischer chemischer Injektor ist.

13. Ambulante Vorrichtung nach einem der Ansprüche 1 bis 12, wobei die Perforationen des Gitters mindestens 1,0 cm breit sind.

14. Verfahren zum Auflösen einer wasserlöslichen Substanz, die unlösliche Feststoffe umfasst, in Wasser, zum Filtern der wässrigen Lösung der im Wesentlichen wasserlöslichen Substanz, um die unlöslichen Feststoffe zu entfernen, und zum Dosieren der filtrierten wässrigen Lösung der im Wesentlichen wasserlöslichen Substanz zu einer externen Wasserleitung, umfassend:
(i) Bereitstellen einer ambulanten Vorrichtung (1) nach einem der Ansprüche 1 bis 13;
(ii) Einbringen einer Menge an Wasser und wasserlöslicher Substanz, die unlösliche Feststoffe umfasst, in die Mischkammer (3);
(iii) Aktivieren der Mischeinrichtung (10), bis die im Wesentlichen wasserlösliche Substanz, die unlösliche Feststoffe umfasst, aufgelöst ist; und
(iv) Aktivieren des pumpenlosen Dosiersystems (13).

15. Verwendung der ambulanten Vorrichtung nach einem der Ansprüche 1 bis 13 zum Entfernen unlöslicher Feststoffe aus einem im Wesentlichen löslichen Düngemittel durch Auflösen des im Wesentlichen löslichen Düngemittels in Wasser und Abtrennen der unlöslichen Feststoffe durch Filtration.

## Revendications

1. Dispositif ambulatoire (1) pour dissoudre, dans de l'eau, une substance essentiellement hydrosoluble comprenant une matière solide insoluble, pour filtrer la solution aqueuse de la substance essentiellement hydrosoluble pour éliminer la matière solide insoluble, et pour doser la solution aqueuse filtrée de la substance essentiellement hydrosoluble vers une conduite d'eau externe, comprenant :
(i) un récipient (2) destiné à contenir un liquide aqueux, dans lequel l'intérieur du récipient (2) est divisé en deux compartiments adjacents séparés, respectivement un compartiment de mélangeage (3) et un compartiment de filtration (4), séparés par un tamis-filtre (5) verticalement positionné comprenant un filtre (6),
(ii) un moyen de mélangeage (10) positionné dans le compartiment de mélangeage (3),
(iii) un système de dosage sans pompe (13) raccordé, à son extrémité d'introduction, à une sortie dans la moitié inférieure du compartiment de filtration (4) pour élimination de la solution aqueuse filtrée, et, à son extrémité d'évacuation, conçue pour être raccordée à une conduite d'eau externe, **caractérisé en ce que** le dispositif ambulatoire comprend une sortie dans la moitié inférieure d'une des parois ou dans la base du compartiment de mélangeage (3) pour élimination de la matière solide insoluble, et le compartiment de mélangeage (3) comprend une grille comprenant une pluralité de perforations, situées au-dessus de la sortie dans la moitié inférieure d'une des parois ou dans la base du compartiment de mélangeage (3) mais en dessous du moyen de mélangeage (10) et recouvrant essentiellement le fond entier du compartiment de mélangeage (3), pour capturer, isoler, et éliminer la matière insoluble, dans lequel les perforations de la grille sont plus grandes que la dimension de maille du filtre.

2. Dispositif ambulatoire (1) selon la revendication 1, dans lequel le récipient (2) a une forme sensiblement rectangulaire, définie par quatre parois latérales rectangulaire verticales et une paroi de fond rectangulaire.

3. Dispositif ambulatoire (1) selon l'une quelconque des revendications 1 et 2, dans lequel le récipient (2) est positionné sur un cadre métallique mobile (7).

4. Dispositif ambulatoire (1) selon l'une quelconque des revendications 1 à 3, dans lequel le rapport volumique du compartiment de filtration (4) relativement au compartiment de mélangeage (3) varie de 1 : 1 à 1 : 5, de préférence est 1 : 3.

5. Dispositif ambulatoire (1) selon l'une quelconque des revendications 1 à 4, dans lequel le récipient (2) est fait de polyéthylène, de préférence de polyéthylène non translucide.

6. Dispositif ambulatoire (1) selon l'une quelconque des revendications 1 à 5, dans lequel le compartiment de mélangeage (3) est pourvu d'une entrée d'eau (9).

7. Dispositif ambulatoire (1) selon l'une quelconque des revendications 1 à 6, dans lequel un ou les deux des compartiments sont fermés par un couvercle, de préférence dans lequel le couvercle est amovible.

8. Dispositif ambulatoire (1) selon la revendication 7, dans lequel le couvercle sur le compartiment de mélangeage (3) comprend une grille ouverte.

9. Dispositif ambulatoire (1) selon l'une quelconque des revendications 1 à 8, dans lequel le filtre (6) dans le tamis-filtre (5) comprend plus de 50 %, de préférence plus de 70 %, au plus 95 % de la surface de tamis-filtre.

10. Dispositif ambulatoire (1) selon l'une quelconque des revendications 1 à 9, dans lequel le filtre (6) a une dimension de maille variant entre 50 et 200 micromètres.

11. Dispositif ambulatoire (1) selon l'une quelconque des revendications 1 à 10, dans lequel le moyen de mélangeage (10) est sélectionné parmi un mélangeur manuel, un mélangeur 24 V à actionnement par batterie, un mélangeur à actionnement par moteur à combustion, et un mélangeur 220 V électrique.

12. Dispositif ambulatoire (1) selon l'une quelconque des revendications 1 à 11, dans lequel le système de dosage sans pompe (13) est un système à base de Venturi ou un injecteur de produit chimique non électrique à actionnement par eau.

13. Dispositif ambulatoire selon l'une quelconque des revendications 1 à 12, dans lequel les perforations de la grille font au moins 1,0 cm de large.

14. Procédé pour dissoudre dans de l'eau une substance hydrosoluble comprenant une matière solide insoluble, pour filtrer la solution aqueuse de la substance essentiellement hydrosoluble pour éliminer la matière solide insoluble, et pour doser la solution aqueuse filtrée de la substance essentiellement hydrosoluble vers une conduite d'eau externe, comprenant :
(i) la fourniture d'un dispositif ambulatoire (1) tel que revendiqué dans l'une quelconque des revendications 1 à 13 ;
(ii) la fourniture d'une quantité d'eau et de substance hydrosoluble, comprenant une matière solide insoluble, dans le compartiment de mélangeage (3) ;
(iii) l'activation du moyen de mélangeage (10) jusqu'à ce que la substance essentiellement hydrosoluble comprenant la matière solide insoluble soit dissoute ; et
(iv) l'activation du système de dosage sans pompe (13).

15. Utilisation du dispositif ambulatoire selon l'une quelconque des revendications 1 à 13 pour éliminer une matière solide insoluble d'un engrais essentiellement soluble par dissolution de l'engrais essentiellement soluble dans de l'eau et séparation de la matière solide insoluble par le biais de filtration.
